# EUROPEAN PATENT APPLICATION

(11) **EP 4 703 875 A1**
(43) Date of publication of application: **04.03.2026**
(21) Application number: 25188284.1
(22) Date of filing: 08.07.2025
(51) Int. Cl.: G06F 9/445, G06F 21/54, G06F 8/41

(54) **SYSTEM AND METHOD FOR PROVIDING RUNTIME SAFETY CONTROL**

(30) Priority: 03.09.2024 US 202418822612
(71) Applicant: Toyota Jidosha Kabushiki Kaisha, Toyota-shi, Aichi-ken 471-8571 (JP)
(72) Inventor: McGary, Caleb, Tokyo, 103-0022 (JP)
(74) Representative: D Young & Co LLP

(57) **Abstract**

Example embodiments of the present disclosure provide runtime safety control. According to embodiments, a method for providing runtime safety control is provided. The method may be performed by a processor and may include: determining whether or not a safety control for a process is needed; based on determining that the safety control is needed, selecting a safety control function from among a plurality of safety control functions; and replacing a no-operation (NOP) slide in a code associated with the process with the selected safety control function.

## Description

### TECHNICAL FIELD

Example embodiments of the present disclosure relate to safety control systems and methods, and more particularly, relate to systems and methods for providing runtime safety control.

### BACKGROUND

In related art code development approaches, functionality is intrinsically hard tied to specific safety controls that must always be coupled with the functionality during the code development phase. This necessitates linking the libraries that provide safety controls as part of the development, which means that function placement (e.g., on a vehicle, etc.) must be known during development.

Further, the related art approaches prohibit the relocation of a function from a non-safety area to a safety area, due to the possibility of safety controls being missed. In order to change the location of the function, the developer is required to spend significant effort in managing the function, such as revising the function, adding safety controls, and then changing the function location thereafter.

In view of the above, the rigid linking between functionality and safety controls imposes a constraint on the development process. Specifically, in order to ensure compliance with safety requirements, the developers are required to obtain the information of the function location prior to starting the development. This results in increased development time and complexity. There is a need to provide a solution that allows the developers to flexibly build and write a function while ensuring that the necessary safety controls are met.

### SUMMARY

Example embodiments consistent with the present disclosure effectively and efficiently provide safety control in runtime.

According to example embodiments, a method for providing runtime safety control is provided. The method may be performed by at least one processor and may include: determining whether or not a safety control for a process is needed; based on determining that the safety control is needed, selecting a safety control function from among a plurality of safety control functions; and replacing a no-operation (NOP) slide in a code associated with the process with the selected safety control function.

According to example embodiments, a system for providing runtime safety control is provided. The system may include at least one memory storage storing computer-executable instructions and at least one processor communicatively coupled to the memory storage. The at least one processor may be configured to execute the instructions to: determine whether or not a safety control for a process is needed; based on determining that the safety control is needed, select a safety control function from among a plurality of safety control functions; and replace an NOP slide in a code associated with the process with the selected safety control function.

According to example embodiments, a non-transitory computer-readable recording medium is provided. The non-transitory computer-readable recording medium may have recorded thereon instructions executable by at least one processor to cause the at least one processor to perform a method to provide runtime safety control. The method may include: determining whether or not a safety control for a process is needed; based on determining that the safety control is needed, selecting a safety control function from among a plurality of safety control functions; and replacing an NOP slide in a code associated with the process with the selected safety control function.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like reference numerals denote like elements, and wherein:
FIG. 1 illustrates a diagram of example components of a runtime safety control system, according to one or more example embodiments;
FIG. 2 illustrates a diagram of an example use case for operating the runtime safety control system, according to one or more example embodiments;
FIG. 3 illustrates an example of a code with annotation, according to one or more embodiments; and
FIG. 4 illustrates a flow diagram of an example method to provide runtime safety control, according to one or more example embodiments.

### DETAILED DESCRIPTION

The following detailed description of exemplary embodiments refers to the accompanying drawings. The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "[A] and/or [B]", "at least one of [A] and [B]", or "at least one of [A] or [B]" are to be understood as including only A, only B, or both A and B.

Reference throughout this specification to "one embodiment," "an embodiment," "non-limiting exemplary embodiment," or similar language means that a particular feature, structure, or characteristic described in connection with the indicated embodiment is included in at least one embodiment of the present solution. Thus, the phrases "in one embodiment", "in an embodiment," "in one non-limiting exemplary embodiment," and similar language throughout this specification may, but do not necessarily, all refer to the same embodiment.

Further, the described features, advantages, and characteristics of the present disclosure may be combined in any suitable manner in one or more example embodiments. One skilled in the relevant art will recognize, in light of the description herein, that the present disclosure can be practiced without one or more of the specific features or advantages of a particular embodiment. In other instances, additional features and advantages may be recognized in certain embodiments that may not be present in all embodiments of the present disclosure.

Furthermore, the term "vehicle" described herein refers to any suitable type of vehicle in which example embodiments of the present disclosure can be implemented. For instance, the "vehicle" may refer to a motorized vehicle such as a car, a truck, a bus, a motorcycle, or any other suitable type of automobile powered by an engine, motor, or other mechanical means. Alternatively or additionally, the "vehicle" described herein may refer to a bicycle, a skateboard, and any other suitable types of non-motorized vehicle, without departing from the scope of the present disclosure.

In addition, although some example embodiments are described herein with reference to example use cases that involve vehicle's components (e.g., electronic control unit (ECU), etc.), it is contemplated that the example embodiments of the present disclosure may also be applicable to any other suitable systems or components, without departing from the scope of the present disclosure.

As described above, there is a need to provide a solution that allows a developer to flexibly and efficiently create and develop a code and/or the associated function, without requiring the developer to know the function location before starting the development while ensuring that the associated safety requirements are met.

Example embodiments of the present disclosure provide runtime safety control, which automatically implements appropriate safety control function during runtime of a code or the associated process, without requiring the developer to manually intervene in the process. Specifically, example embodiments of the present disclosure automatically determine whether or not a safety control for a process is required during runtime. Accordingly, based on determining that the safety control is needed, a no-operation (NOP) slide in a code associated with the process will be replaced with an appropriate safety control function.

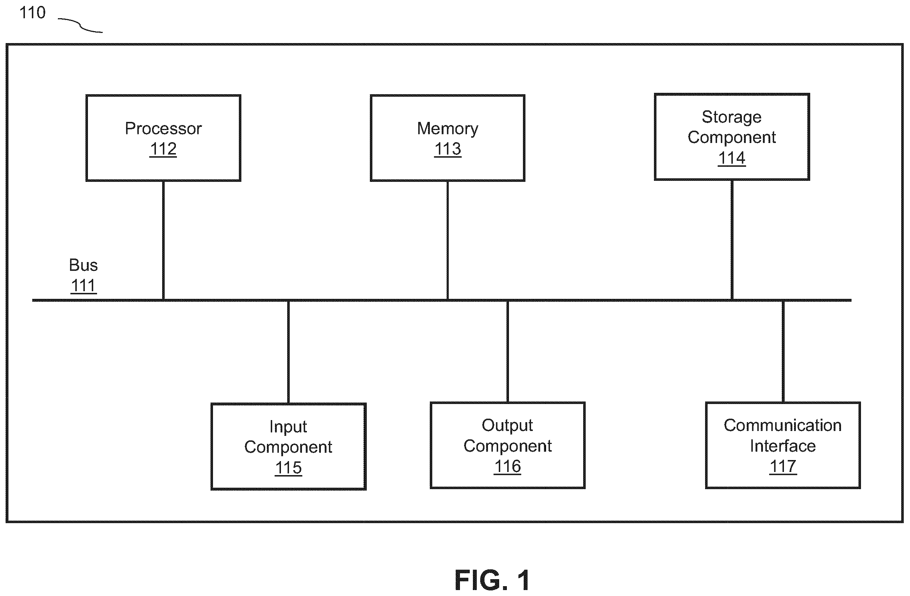

FIG. 1 illustrates a diagram of a runtime safety control system, according to one or more embodiments. As illustrated in FIG. 1, the runtime safety control system 110 may include at least one bus 111, at least one processor 112, at least one memory 113, at least one storage component 114, at least one input component 115, at least one output component 116, and at least one communication interface 117. These components may be configured to interoperate with each other to implement one or more operations described herein, thereby providing the runtime safety control. The runtime safety control system 110 may be implemented in a code development system.

It is contemplated that the system 110 may include more or less components than illustrated in FIG. 1, without departing from the scope of the present disclosure. For instance, in some example embodiments, the system 110 may include a plurality of storage components 114, the input component 115 and the output component 116 may be implemented as a transceiver component, the memory 113 and storage component 114 may be implemented as a memory storage, and the like.

The bus 111 may be configured to facilitate or enable communications among the components of the system 110. Specifically, the bus 111 may communicatively couple the components to each other and provide a means for data transfer and flow of control signals between the components. The bus 111 may include one or more of: an internal bus, an address bus, a data bus, a control bus, a controller area network (CAN) bus, an Ethernet bus, a peripheral component interconnect express (PCIe) bus, and any other suitable type of bus that can be implemented in the system 110 to enable communication and coordination between the components within the system 110 in real-time (or near real-time).

The processor 112 may be implemented in hardware, firmware, or a combination of hardware and software, and may be configured to handle real-time (or near real-time) data processing and control of the control system 110. The processor 112 may include one or more of: a central processing unit (CPU), a graphics processing unit (GPU), a neural processing unit (NPU), a tensor processing unit (TPU), an accelerated processing unit (APU), a microprocessor, a microcontroller, a digital signal processor (DSP), a field-programmable gate array (FPGA), an application-specific integrated circuit (ASIC), and/or another type of processing or computing component that can be implemented in the system 110.

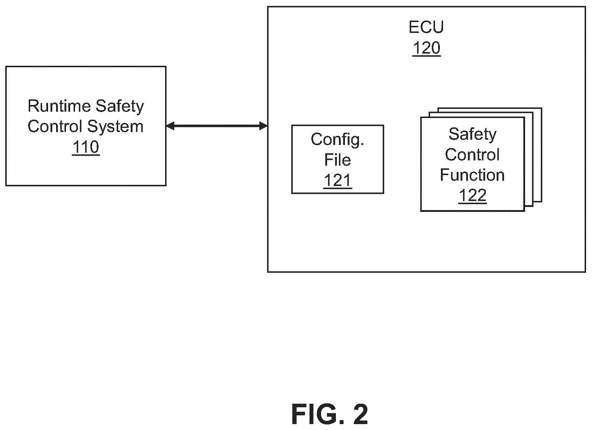

In some example implementations, the processor 112 may be capable of being programmed to perform one or more operations described herein. Further, the processor 112 may include a plurality of processing units, each of which is dedicated to performing a specific operation (e.g., one processing unit may be configured to compile a code, one processing unit may be configured to execute the code and provide runtime safety control thereon, etc.) Furthermore, in some example embodiments, the processor 112 may act as a code compiler and may be configured to compile a code. In addition, the processor 112 may act as an execution manager and may be configured to execute a code to perform a process (e.g., a process associated with an ECU, etc.) Example operations that may be performed by the processor 112 are further described below with reference to FIG. 2 to FIG. 4.

The memory 113 may include one or more mediums for storing temporary data, runtime variables, program instructions, and buffers required for the operations of the control system 110. The memory 113 may include one or more of: a flash memory, a read-only memory (ROM), a random-access memory (RAM), a dynamic or static storage device (e.g., a flash memory, a magnetic memory, and/or an optical memory), any other suitable type of memory that can be implemented in the control system 110 to store information and/or instructions for use by the processor 112.

The storage component 114 may be configured to store non-volatile data, such as firmware, configuration settings, calibration data, information, and/or software related to the operation and use of the control system 110. For example, the storage component 114 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

According to embodiments, the storage component 114 may be configured to store computer-readable or computer-executable instructions for implementing one or more operations of the system 110. The storage component 114 may provide the stored information to the memory 113 for the execution of the processor 112.

The input component 115 may include one or more input components that permit the system 110 to receive information, such as via user input (e.g., a touch screen display, a keyboard, a keypad, a mouse, a button, a switch, and/or a microphone). The output component 116 may include one or more output components that provide output information from the system 110 (e.g., a display, a speaker, a navigation device, one or more light-emitting diodes (LEDs), etc.) According to embodiments, the input component 115 and/or the output component 116 may be optional and may be excluded from the system 110.

The at least one communication interface 117 may include a transceiver-like component (e.g., a transceiver and/or a separate receiver and transmitter) that enables the control system 110 to communicate with other components (e.g., ECUs, user devices, etc.), such as via a wired connection, a wireless connection, or a combination of wired and wireless connections. For example, communication interface 117 may include a controller area network (CAN) bus interface, an Ethernet interface, an optical interface, a coaxial interface, an infrared interface, a radio frequency (RF) interface, a universal serial bus (USB) interface, a Wi-Fi interface, a cellular network interface, or the like.

According to one or more embodiments, the communication interface 117 may include at least one input/output (I/O) interface, at least one network interface, at least one storage interface, or the like, that enable the components 112-116 to communicate with other components. Further, the communication interface 117 may include one or more application programming interfaces (APIs) that allow the system 110 (or one or more components included therein) to communicate with one or more software applications (e.g., software application deployed in the ECUs, etc.)

Computer-executable instructions (e.g., software instructions, etc.) may be read into memory 113 and/or storage component 114 from another computer-readable medium or from another device (e.g., a remote server, an external storage, etc.) via, for example, the communication interface 117. When executed, the computer-executable instructions stored in memory 113 and/or storage component 114 may cause the processor 112 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

According to example embodiments, the runtime safety control system 110 may communicatively couple to one or more components associated with a vehicle system, such as an ECU associated with the vehicle system. FIG. 2 illustrates a diagram of an example use case in which the runtime safety control system 110 interoperates with an ECU 120, according to one or more example embodiments.

The ECU 120 may include a physical ECU (e.g., partially developed/fully developed ECU, etc.), a component configured to host or deploy a software-based ECU (e.g., virtual V-ECU, etc.), a component configured to emulate an ECU, or a combination thereof. Further, the ECU 120 may include at least one of: a central ECU (CECU), an instrument cluster (IC) ECU, an in-vehicle infotainment (IVI) ECU, an advanced driver assistance system (ADAS) ECU, a communication ECU, a power train ECU, an engine ECU, an odometer ECU, and any other suitable types of ECU.

As illustrated in FIG. 2, the ECU 120 may include at least one configuration file 121 and a plurality of safety control functions 122. The configuration file 121 may reside in the root of a primary file system of the ECU 120 and may be associated with an automotive safety integrity level (ASIL) level requirement of the ECU. For instance, the configuration file may define ASIL level requirements and/or the associated configurations for a software (or the associated code) of the ECU, such as software of brake control, traction control, air-bag control, and the like.

On the other hand, the plurality of safety control functions 122 may reside or be stored in a folder in the ECU, and each of the safety control functions 122 may include one or more raw assembly formats of a safety control function, such that they can be selected and inserted into software (or the associated code) as needed. Further, each of the safety control functions may be pre-compiled (by the system 110 and/or any other suitable compiler) for a respective type of safety use case, such as a safety use case associated with one or more of: an end-to-end protection requirement, a freedom of interference requirement, a health management requirement, and a watchdog requirement. These safety control functions may share common functionality, such as locating a predefined variable in memory and setting it to false. In some example embodiments, the configuration file 121 may contain a reference to the folder, such that the runtime safety control system 110 may know where to find the appropriate safety controls.

When a process (e.g., a process associated with the ECU) is going to be launched by the runtime safety control system 110 (or any other suitable execution system) during runtime, the system 110 may be configured to determine whether or not a safety control for the process is needed. Based on determining that the safety control is needed, the system 110 may be configured to select a safety control function from among the plurality of safety control functions 122, and then replace a no-operation (NOP) slide in a code associated with the process with the selected safety control function. This NOP slide has the same size as a potential safety control function, namely, the instruction set length or size of the NOP slide matches the instruction set length and size of the safety control functions 122. In some example implementations, based on determining that the safety control is not needed, the system 110 may be configured to shrink the NOP slide in the code down to a single instruction.

For instance, the system 110 may obtain the configuration file 121 from the ECU, and determine whether or not the code fulfills the ASIL level requirement defined in the configuration file 121. Accordingly, based on determining that the code does not fulfill the ASIL level requirement, the system 110 may determine that the safety control is needed and then proceed to select the appropriate safety control function and modify the code based on the selected safety control function (e.g., replace the NOP slide in the code with the pre-compiled assembly of the safety function), thereby ensuring that the code (and the process associated therewith) satisfies the safety requirement. On the other hand, based on determining that the code fulfills the ASIL level requirement, the system 110 may determine that the safety control is not needed, and then proceed to shrink the NOP slide in the code down to a single instruction, thereby avoiding or reducing performance hit from having unnecessary portion in the code. Subsequently, the system 110 may be configured to execute the code to launch the process.

According to example embodiments, the system 110 may be configured to select the safety control function by: determining, based on the configuration file 121, a folder in the ECU that contains the plurality of safety control functions 122; determining which of the plurality of safety control functions fulfills the ASIL level requirement; and selecting the safety control function that fulfills the ASIL level requirement. In this regard, the system 110 may be configured to replace the NOP slide with the selected safety control function by: obtaining, from the folder of the ECU, the selected safety control function, and replacing the NOP slide with the obtained safety control function.

According to example embodiments, the system 110 (or any suitable compiler) may be configured to compile the code. Specifically, upon obtaining the code, the system 110 may be configured to determine whether or not the code includes an annotation associated with the safety control. Accordingly, based on determining that the code includes the annotation, the system 110 may be configured to replace the annotation with an appropriate NOP slide. Subsequently, when the code is required to be executed to launch a process, the system 110 may determine whether or not the NOP slide should be replaced with an appropriate safety control function or should be shrunk down to a single instruction, in a similar manner as described in above.

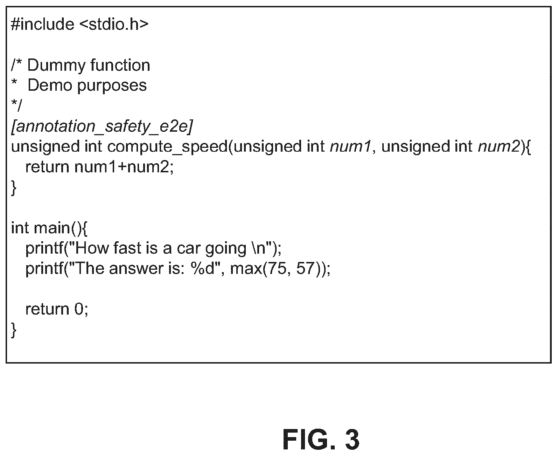

FIG. 3 illustrates an example of a code with an annotation, according to one or more embodiments. This example code may be built for demo purposes, and thus it is contemplated that the contents of an actual code may be different according to the implementation requirements.

As illustrated in FIG. 3, the code may include an annotation "[annotation_safety_e2e]", which is an annotation added by the developer to the portion of the code where a potential safety control (e.g., end-to-end protection) would be needed. In this regard, when compiling the code, the runtime safety control system 110 (or any other suitable compiler) may recognize the annotation and insert an appropriate NOP slide therein. For instance, the system 110 (or the compiler) may replace the annotation "[annotation_safety_e2e]" with an NOP slide or instruction that matches the length or size of an end-to-end safety control function for the parameters "num1" and "num2".

In this regard, the system 110 (or the compiler) may set up a function to call into this NOP slide (or instruction) with appropriate parameters without taking any further action. Accordingly, the system 110 (or the compiler) may return a success code, unless a predefined variable is set to false.

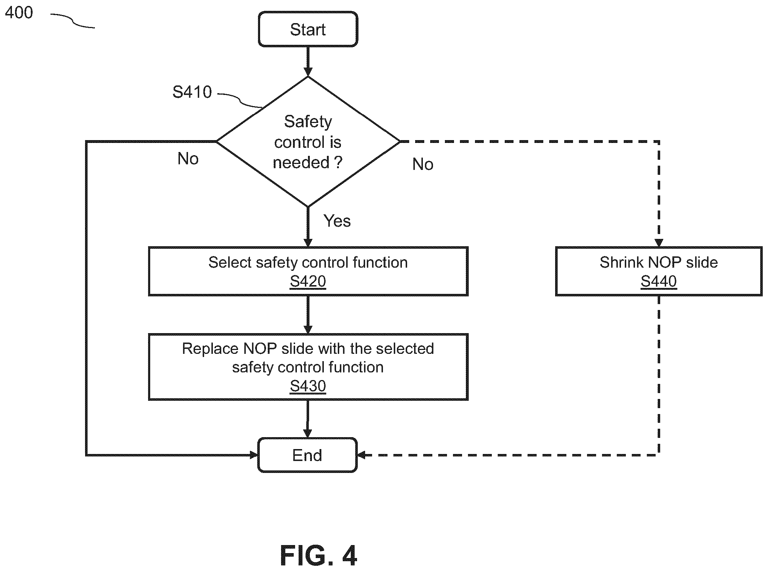

Referring next to FIG. 4, which illustrates a flow diagram of an example method 400 for providing runtime safety control, according to one or more example embodiments. One or more operations of the method 400 may be performed by the runtime safety control system described above with reference to FIG. 1 to FIG. 3. Specifically, one or more operations of the method 400 may be performed by at least one processor (e.g., processor 112) of the system, upon executing computer-readable instructions (or computer-executable instructions) stored in a memory storage (e.g., memory 113, storage component 114, etc.) of the system. Further, it is contemplated that the method 400 may involve one or more features described above with reference to FIG. 1 to FIG. 3, such as the runtime safety control system 110, ECU 120, configuration file 121, safety control function 122, and the like. Thus, redundant descriptions associated therewith may be omitted below for conciseness.

As illustrated in FIG. 4, at operation S410, the processor may be configured to determine whether or not a safety control for a process is needed. According to example embodiments, the process may be associated with an ECU (e.g., ECU 120). Further, as described above, the processor may be configured to determine whether or not the safety control for the process is needed by: obtaining a configuration file (e.g., configuration file 121) associated with an automotive safety integrity level (ASIL) level requirement of the ECU; determining, based on the configuration file, whether or not the code fulfills the ASIL level requirement; based on determining that the code does not fulfill the ASIL level requirement, determining that the safety control is needed; and based on determining that the code fulfills the ASIL level requirement, determining that the safety control is not needed.

Based on determining that the safety control is needed, the method 400 may proceed to operation S420. Otherwise, based on determining that the safety control is not needed, the method 400 may be ended or be terminated. Alternatively, based on determining that the safety control is not needed, the method 400 may proceed to operation S440.

Referring still to FIG. 4, at operation S420, the processor may be configured to select a safety control function from among a plurality of safety control functions. As described above, the processor may be configured to select the safety control function by: determining, based on the configuration file (e.g., obtained at operation S410), a folder in the ECU that contains the plurality of safety control functions; determining which of the plurality of safety control functions fulfill the ASIL level requirement; and selecting the safety control function that fulfills the ASIL level requirement. According to example embodiments, the plurality of safety control functions may be stored in a raw assembly format. Further, each of the plurality of safety control functions (including the selected safety control function) may be associated with at least one of: an end-to-end protection requirement, a freedom of interference requirement, a health management requirement, and a watchdog requirement.

Subsequently, at operation S430, the processor may be configured to replace a no-operation (NOP) slide in a code associated with the process with the selected safety control function. As described above, the processor may be configured to replace the NOP slide with the selected safety control function by: obtaining, from the folder of the ECU (e.g., a folder defined in the configuration file obtained at operation S410), the selected safety control function; and replacing the NOP slide with the obtained safety control function. Accordingly, the processor may execute the modified code to launch the process.

On the other hand, at operation S440, based on determining that the safety control is not needed, the processor may be configured to shrink the NOP slide in the code down to a single instruction. Accordingly, the processor may execute the modified code to launch the process.

According to example embodiments, before performing operation S410, the processor may be configured to compile the code. In this regard, when compiling the code, the processor may be configured to determine whether or not the code includes an annotation associated with the safety control. Accordingly, based on determining that the code includes the annotation, the processor may be configured to replace the annotation with the NOP slide.

To this end, example embodiments of the present disclosure provide a system, a method, and the like, that may be configured to provide safety control during runtime. Specifically, when running a code, the system may perform one or more operations to adjust the code (e.g., replacing the NOP slide with appropriate safety control function) according to the safety requirements. Further, when compiling the code, the system may recognize an annotation in the code and appropriately insert or replace the annotation with an NOP slide. Ultimately, the system and method of the example embodiments may provide runtime safety control, without requiring the intervention of the user.

It is contemplated that features, advantages, and significances of example embodiments described hereinabove are merely a portion of the present disclosure, and are not intended to be exhaustive or to limit the scope of the present disclosure. Further descriptions of the features, components, configuration, operations, and implementations of example embodiments of the present disclosure, as well as the associated technical advantages and significances, are provided in the following.

It is understood that the specific order or hierarchy of blocks in the processes/ flowcharts disclosed herein is an illustration of example approaches. Based upon design preferences, it is understood that the specific order or hierarchy of blocks in the processes/ flowcharts may be rearranged. Further, some blocks may be combined or omitted. The accompanying method claims present elements of the various blocks in a sample order, and are not meant to be limited to the specific order or hierarchy presented.

Some embodiments may relate to a system, a method, and/or a computer-readable medium at any possible technical detail level of integration. Further, as described hereinabove, one or more of the above components described above may be implemented as instructions stored on a computer readable medium and executable by at least one processor. The computer-readable medium may include a computer-readable non-transitory storage medium (or media) having computer-readable program instructions thereon for causing a processor to carry out operations.

The computer readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object-oriented programming languages such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or another device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer-readable media according to various embodiments. In this regard, each block in the flowchart or block diagrams may represent a module, segment, or portion of instructions, which comprises one or more executable instructions for implementing the specified logical function(s). The method, computer system, and computer-readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

## Claims

1. A method performed by at least one processor to provide runtime safety control, the method comprising:
determining whether or not a safety control for a process is needed;
based on determining that the safety control is needed, selecting a safety control function from among a plurality of safety control functions; and
replacing a no-operation (NOP) slide in a code associated with the process with the selected safety control function.

2. The method according to claim 1, further comprises:
based on determining that the safety control is not needed, shrinking the NOP slide in the code down to a single instruction.

3. The method according to claim 1 or 2, further comprises:
determining whether or not the code includes an annotation associated with the safety control; and
based on determining that the code includes the annotation, replacing the annotation with the NOP slide.

4. The method according to any one of claims 1 to 3, wherein the process is associated with an electronic control unit (ECU).

5. The method according to claim 4, wherein the determining whether or not the safety control for the process is needed comprises:
obtaining a configuration file associated with an automotive safety integrity level (ASIL) level requirement of the ECU;
determining, based on the configuration file, whether or not the code fulfills the ASIL level requirement;
based on determining that the code does not fulfill the ASIL level requirement, determining that the safety control is needed; and
based on determining that the code fulfills the ASIL level requirement, determining that the safety control is not needed.

6. The method according to claim 5, wherein the selecting the safety control function comprises:
determining, based on the configuration file, a folder in the ECU that contains the plurality of safety control functions;
determining which of the plurality of safety control functions fulfill the ASIL level requirement; and
selecting the safety control function that fulfills the ASIL level requirement.

7. The method according to claim 6, wherein the replacing the NOP slide with the selected safety control function comprises:
obtaining, from the folder of the ECU, the selected safety control function; and
replacing the NOP slide with the obtained safety control function.

8. The method according to claim 6 or 7, wherein the plurality of safety control functions are stored in a raw assembly format.

9. The method according to any one of claims 1 to 8, wherein the selected safety control function is associated with at least one: an end-to-end protection requirement, a freedom of interference requirement, a health management requirement, and a watchdog requirement.

10. A system for providing runtime safety control, the system comprising:
a memory storage storing computer-executable instructions; and
at least one processor communicatively coupled to the memory storage, wherein the at least one processor is configured to execute the instructions to:
determine whether or not a safety control for a process is needed;
based on determining that the safety control is needed, select a safety control function from among a plurality of safety control functions; and
replace a no-operation (NOP) slide in a code associated with the process with the selected safety control function.

11. The system according to claim 10, wherein the at least one processor is further configured to:
based on determining that the safety control is not needed, shrink the NOP slide in the code down to a single instruction.

12. The system according to claim 10 or 11, wherein the at least one processor is further configured to:
determining whether or not the code includes an annotation associated with the safety control; and
based on determining that the code includes the annotation, replacing the annotation with the NOP slide.

13. The system according to any one of claims 10 to 12, wherein the process is associated with an electronic control unit (ECU).

14. The system according to claim 13, wherein the at least one processor is configured to determine whether or not the safety control for the process is needed by:
obtaining a configuration file associated with an automotive safety integrity level (ASIL) level requirement of the ECU;
determining, based on the configuration file, whether or not the code fulfills the ASIL level requirement;
based on determining that the code does not fulfill the ASIL level requirement, determining that the safety control is needed; and
based on determining that the code fulfills the ASIL level requirement, determining that the safety control is not needed.

15. The system according to claim 14, wherein the at least one processor is configured to select the safety control function by:
determining, based on the configuration file, a folder in the ECU that contains the plurality of safety control functions;
determining which of the plurality of safety control functions fulfill the ASIL level requirement; and
selecting the safety control function that fulfills the ASIL level requirement.

16. The system according to claim 15, wherein the at least one processor is configured to replace the NOP slide with the selected safety control function by:
obtaining, from the folder of the ECU, the selected safety control function; and
replacing the NOP slide with the obtained safety control function.

17. The system according to claim 15 or 16, wherein the plurality of safety control functions are stored in a raw assembly format.

18. The system according to any one of claims 10 to 17, wherein the selected safety control function is associated with at least one: an end-to-end protection requirement, a freedom of interference requirement, a health management requirement, and a watchdog requirement.

19. A computer program to cause at least one processor to perform a method to provide runtime safety control, the method comprising:
determining whether or not a safety control for a process is needed;
based on determining that the safety control is needed, selecting a safety control function from among a plurality of safety control functions; and
replacing a no-operation (NOP) slide in a code associated with the process with the selected safety control function.

20. The computer program according to claim 19, wherein the method further comprises:
based on determining that the safety control is not needed, shrinking the NOP slide in the code down to a single instruction.
